# FASCICULE DE BREVET EUROPEEN

(11) **EP 2 984 659 B1**
(45) Date de publication et mention de la délivrance du brevet: **14.02.2018**
(21) Numéro de dépôt: 14720187.5
(22) Date de dépôt: 03.04.2014
(51) Int. Cl.: H01F 5/06

(54) **FABRICATION DE BOBINES POUR COMPOSANTS ÉLECTROTECHNIQUES UTILISANT DES BANDES D'ALUMINIUM ANODISÉ NON COLMATÉ**
HERSTELLUNG VON SPULEN FÜR ELEKTROTECHNISCHE BAUELEMENTE DURCH STREIFEN VON UNVERSIEGELTEM ELOXIERTEM ALUMINIUM
MANUFACTURE OF COILS FOR ELECTROTECHNICAL COMPONENTS USING STRIPS OF UNSEALED ANODISED ALUMINIUM

(30) Priorité: 08.04.2013 FR 1353146
(43) Date de publication de la demande: 17.02.2016
(73) Titulaire: Safran Electrical & Power, 31702 Blagnac Cedex (FR)
(72) Inventeur: CHARLAS, Mathieu, F-77210 Avon (FR)
(74) Mandataire: Gevers & Orès
(86) Numéro de dépôt international: PCT/FR2014/050810
(87) Numéro de publication internationale: WO 2014/167223

(56) Documents cités:
- EP-A1- 0 441 061
- GB-A- 773 911
- GB-A- 1 255 336

## Description

### Domaine technique :

La présente invention concerne les équipements électrotechniques inductifs tels que des inductances, des transformateurs ou encore des moteurs électriques. Elle vise plus particulièrement la réalisation des bobinages utilisés dans ces composants.

### Etat de l'art :

Pour créer un champ magnétique, les bobines doivent être formées à partir de fils conducteurs revêtus d'une couche de matériau isolant. Toute défaillance de ce matériau isolant aurait pour conséquence de court-circuiter les spires, donc de diminuer la valeur d'inductance de la bobine.

Les bobines sont usuellement constituées de fil de cuivre. Actuellement, l'isolation des fils est réalisée avec des matériaux polymères thermodurcissables tels que des vernis polyesters, polyamide, polyépoxydes ou polyimides, en fonction des exigences de tenue en température spécifiées. Une fois les bobines de fils isolées réalisées, elles sont sur-imprégnées par une autre couche de résine. Ces solutions permettent de réaliser des bobines compactes, satisfaisantes pour les applications courantes.

Les applications aéronautiques imposent une optimisation en masse et volume de ces solutions. Une première piste consiste à optimiser le pourcentage de volume du conducteur sur le volume total de la bobine isolée. L'usage de fils de cuivre à section rectangulaire, par exemple, répond à cet objectif en limitant les interstices par rapport à des fils à section circulaire.

Cependant, pour gagner encore en poids, l'aluminium est utilisé à la place du cuivre, comme indiqué dans le document EP-A1-0441061. De fait, l'utilisation de bandes d'aluminium pour fabriquer les bobines combine l'avantage d'une géométrie compacte et d'un matériau conducteur à faible densité.

De plus, l'utilisation de l'anodisation pour isoler électriquement l'aluminium est une solution très mature qui présente également l'avantage d'avoir une tenue à la température très largement supérieure aux solutions actuelles.
En conséquence, des bobines d'aluminium anodisé utilisables pour la réalisation de composants électrotechniques sont actuellement commercialisées. Elles sont livrées aux dimensions du composant et il ne reste ensuite qu'à les intégrer dans ce dernier avec, notamment, une sur-imprégnation de résine.

Cependant, l'utilisation de ces bobines présente plusieurs inconvénients :
- En premier lieu, l'aluminium est immédiatement colmaté par de l'eau chaude après anodisation, ce qui a pour effet de boucher les pores de l'alumine formée lors de l'anodisation et ainsi de diminuer les propriétés d'adhérence de cette surface, donc de diminuer la durée de vie du composant ;
- De plus, la fabrication de la bobine nécessite l'usage d'un adhésif afin de coller les bandes d'aluminium anodisé les unes sur les autres ; l'usage de cet adhésif introduit un matériau supplémentaire dont l'interface non maîtrisée avec la résine utilisée pour la sur-imprégnation dans le composant diminue la durabilité du composant.

### Présentation de l'invention:

L'invention a pour but de remédier aux défauts précités.

Elle concerne un procédé de fabrication d'une bande d'aluminium anodisé imprégnée, destinée à être utilisée dans une bobine d'un composant électrotechnique, ladite bobine comprenant un matériau interstitiel assurant les fonctions de cohésion et d'isolation diélectrique, ledit matériau interstitiel étant obtenu à partir d'un mélange précurseur apte à réticuler, ledit procédé comportant :
- une étape d'application du mélange précurseur dudit matériau interstitiel sur l'aluminium anodisé ;
- au moins une étape de réticulation du mélange précurseur pour former ledit matériau interstitiel sur la bande d'aluminium.
Ce procédé est remarquable en ce que l'aluminium anodisé n'a pas subi de colmatage des pores de l'alumine formée par l'anodisation avant l'application du mélange précurseur dudit matériau interstitiel.

De manière connue, la réticulation du mélange précurseur consiste à former, par réactions chimiques entre ses composants lorsque ce mélange est soumis à certaines conditions physiques, des structures moléculaires s'organisant en réseau.

Le fait de remplacer l'opération de colmatage à l'eau chaude par celle d'imprégnation du mélange précurseur de matériau interstitiel apte à réticuler permet de créer des conditions d'adhérence idéales sur la surface de l'aluminium anodisé avec ce même matériau interstitiel lorsqu'il sera utilisé pour fabriquer la bobine dans le composant électrotechnique. En effet l'alumine poreuse créée en fin d'anodisation étant imprégnée du matériau interstitiel, l'interface avec celui-ci sera ainsi très intime et donc durable.

De préférence, le mélange précurseur utilisé dans le procédé comprend une résine et un durcisseur. Généralement, on dit que cette résine est thermodurcissable car la réticulation du mélange précurseur s'effectue

Avantageusement, pour que la résine ait les propriétés requises de tenue en tension et d'isolation diélectrique dans les conditions de fonctionnement des composants aéronautiques, il entre dans sa formulation au moins un composant choisi parmi les polyépoxydes, polyimides ou les silicones.

Dans une variante préférée, lorsque le matériau interstitiel est de la résine thermodurcissable, il est fabriqué des bandes d'aluminium anodisé pré-imprégnées par le procédé initial dans lequel l'étape de réticulation est inachevée.

Ne faire que démarrer l'étape de réticulation permet de stocker ces bandes d'aluminium anodisé pré-imprégnées, de préférence à basse température, pour les réutiliser plus tard.

Dans une variante de réalisation, le matériau interstitiel est un matériau mis en oeuvre par un procédé sol-gel. Bien que les réactions chimiques transformant le mélange précurseur soient très différentes par leur nature et leur cycle de température de celles d'une résine thermodurcissable, elles opèrent une forme de réticulation en aboutissant à un matériau présentant une structure dans l'espace qui n'existait pas dans le mélange précurseur. Les procédés sol-gel présentent l'avantage de permettre d'obtenir divers matériaux, certains, par exemple, ayant une meilleure tenue en température que les résines.

De fait, l'invention concerne également un procédé de fabrication d'un composant électrotechnique comprenant au moins une bobine, ladite bobine comprenant une bande d'aluminium anodisé enroulée en spires et un matériau interstitiel assurant les fonctions de cohésion et d'isolation diélectrique, caractérisé en ce que :
- La bande d'aluminium anodisé est imprégnée selon l'une des revendications précédentes ;
- au moins une étape de réticulation définitive du mélange précurseur pour former ledit matériau interstitiel sur la bande d'aluminium est réalisée lorsque celle-ci est mise en forme aux dimensions de la bobine.

Dans une telle configuration, une partie de l'isolation électrique entre les enroulements de la bobine est assurée par la couche anodisée d'aluminium sur les bandes. Le matériau interstitiel assure lui les fonctions de protection et de cohésion pour maintenir la bobine dans la forme spécifiée. Il assure également un complément d'isolation diélectrique entre les bandes d'aluminium. De plus, le procédé permet ainsi d'avoir un seul matériau enveloppant les bandes d'aluminium dans la bobine et élimine les interfaces indésirables entres matériaux divers.

Avantageusement, lorsque le matériau interstitiel est de la résine, le procédé de fabrication du composant électrotechnique décrit précédemment est aménagé en utilisant la bande d'aluminium anodisé pré-imprégnée qui est ensuite mise en forme aux dimensions de la bobine et subit l'étape de réticulation définitive.

L'invention concerne également les bandes d'aluminium anodisé pré-imprégnées et les composants électrotechniques obtenus par les procédés précités.

### Description d'un mode de réalisation de l'invention :

L'invention va maintenant être présentée plus en détail pour quelques exemples de réalisation.

L'anodisation de l'aluminium correspond à une oxydation contrôlée de la surface de la pièce, ici la bande d'aluminium. Par exemple, selon un procédé connu, la création de la couche anodique est le résultat du passage d'un courant dans un électrolyte. Le bassin d'anodisation contient, par exemple mais de manière non limitative, une solution d'acide phosphorique dans lequel est placée la bande d'aluminium. Un courant continu est appliqué pour une période déterminée afin de créer la couche anodique d'épaisseur spécifiée, de l'ordre de la dizaine de microns.

La couche d'alumine ainsi créée est un excellent isolant électrique. Elle a aussi de bonnes propriétés mécaniques. Cependant, elle présente une structure alvéolée, avec des micropores, qui laisse passer des impuretés amenant à une corrosion de la bande d'aluminium avec le temps.

Pour cette raison, les produits en aluminium anodisé, notamment lorsqu'ils doivent être stockés, font l'objet d'une opération dite de colmatage. Cette opération consiste en une hydratation de la couche anodique qui a pour résultat de faire gonfler les parois des cellules et en obstruer les trous. Cette opération est généralement réalisée en trempant l'aluminium anodisé dans de l'eau chaude, en contrôlant la température et la durée.

Malheureusement pour l'application visée, la couche anodisée ainsi colmatée a perdu ses propriétés de surface. Notamment, l'alumine alvéolée est plus apte à se lier avec un matériau adhésif que le revêtement d'hydrate obtenu après colmatage.

Une première mise en oeuvre de l'invention consiste en une transposition du concept de pr é-imprégnation utilisé dans l'industrie des matériaux composites à matrice organique au cas où la matrice est une bande d'aluminium anodisé, non colmaté, et le matériau d'imprégnation, la résine qui va servir, in fine, à fabriquer la bobine dans le composant.

En fait, la résine thermodurcissable, qui est un mélange de polymères et autres ingrédients dont il existe plusieurs formulations connues selon les types d'applications, va se présenter au cours des étapes du procédé sous plusieurs états. Dans son état final, en tant que matériau de cohésion de la bobine, la résine est un matériau solide, ayant des propriétés de tenue mécanique adéquates. Cependant, cet état solide est obtenu à partir d'une forme fluide, malléable, par un procédé dit de réticulation. Généralement ce procédé est un traitement thermique. Il organise en réseau la structure moléculaire du polymère pour lui donner sa forme solide. Dans le présent document, on appellera par la suite la résine dans son état fluide avant la réticulation, le mélange précurseur. De manière connue, ce mélange précurseur contient une résine appartenant au groupe suivant : polyimide, polyépoxyde, polyamide, polyamide-imide, polyester, polyesterimide, silicone, phénolique, ou polyuréthane. De manière connue, il contient également un durcisseur, réagissant avec la résine pour effectuer la réticulation. Il peut contenir des additifs aidant au déroulement du processus global, tels que des solvants et des catalyseurs. Dans le cas des résines thermodurcissables connues, cette réticulation peut être faite de manière incomplète. Cela permet de donner une première forme, gélifiée, à la résine et de la stocker ainsi, pour reprendre ensuite le processus de réticulation et le mener à son terme. Au cours du processus de réticulation final, deux couches de résine prétraitées peuvent ainsi être soudées entre elles comme si elles n'avaient formé qu'un seul élément.

La première étape du processus de réalisation de la bobine du composant est donc la fabrication de la bande d'aluminium anodisé non colmaté. Ensuite, la réalisation de la bande d'aluminium pré-imprégné comporte trois étapes importantes.

Une première étape consiste à déposer sur la bande d'aluminium venant d'être anodisée et non colmatée, une couche de mélange précurseur de la résine qui sera utilisée pour fabriquer la bobine dans le composant électrotechnique. De manière préférentielle, le précurseur comprend au moins un solvant qui lui donne les propriétés rhéologiques nécessaires pour se déposer régulièrement et pénétrer dans les pores de la couche d'aluminium anodisé, afin de se lier intimement avec cette dernière. Des méthodes connues, par projection ou par trempage, existent pour assurer un dépôt uniforme du mélange précurseur et une bonne pénétration à travers les pores de la couche anodisée.

Une deuxième étape, de réticulation incomplète, consiste en un traitement thermique intermédiaire qui démarre la réticulation et gélifie le polymère. Dans l'état gélifié, la résine et le durcisseur ont suffisamment réagi pour commencer un réseau tridimensionnel et permettre au produit d'adhérer à l'aluminium anodisé. Par contre, la rigidité du matériau est encore très faible. Cet état est intéressant car il permet de former une couche de protection adhérant correctement à la bande d'aluminium anodisé pour la stocker avant de l'intégrer à un composant et, surtout, comme on le verra plus tard, de reprendre le processus de réticulation pour assurer la cohésion du produit.

Enfin, une troisième étape, de stockage à basse température (-20 degrés C en général), est nécessaire pour stabiliser le matériau et expédier la bande d'aluminium anodisée pré-imprégnée sur le lieu de production de la pièce finale. Dans une première variante, les bandes d'aluminium pré-imprégné sont formées en bobines aux dimensions du composant électrotechnique à réaliser avant d'être stockées. Dans une seconde variante, lesdites bobines ne sont pas préformées et c'est la bande de pré-imprégéné qui sera utilisée à la demande.

La réalisation de la bobine du composant électrotechnique à partir d'une telle bande d'aluminium anodisé pré-imprégnée comporte encore trois étapes principales.

Dans une première étape, la bande d'aluminium anodisé pré-imprégnée est réchauffée à température ambiante pour pouvoir être mise en place dans le composant électrotechnique. Selon la variante choisie pour le stockage, c'est la bobine toute prête qui est installée. Sinon, la bande d'aluminium pré-imprégnée à température ambiante est préalablement bobinée aux dimensions de la bobine du composant électrotechnique..

Dans une seconde étape, d'imprégnation complète, la totalité du composant est enduite de résine, y compris la, ou les, bobine(s) qui la composent.

La dernière étape consiste en un traitement thermique complet qui aboutit à une réticulation définitive de la résine autour des bandes d'aluminium anodisé, non colmaté, enroulées selon la forme de la bobine du composant.

Dans cette étape, les couches de résine gélifiée de deux bandes pré-imprégnées superposées fusionnent entre elles et avec la résine qui enduit le composant, grâce au fait que leur réseau moléculaire non achevé autorise une recombinaison avec la matière voisine Il ne reste donc comme interface que celle entre la résine et l'aluminium anodisé non colmaté dont les caractéristiques d'adhérence ont été assurées dès la pré-imprégnation.

Pour mettre en oeuvre cette invention, il est important que la résine présente :
- Les propriétés rhéologiques permettant d'enduire les bandes d'aluminium anodisées d'une couche de polymère sur une épaisseur suffisante pour assurer son rôle d'isolation électrique ;
- Les propriétés rhéologiques permettant une pénétration de la résine à travers les pores de l'alumine issue du procédé d'aluminisation ;
- Une tenue en tension électrique compatible avec le composant électrotechnique ;
- Une tenue en température compatible les applications visées ;
- Un temps de gel compatible avec le procédé d'anodisation ;
- Une température de réticulation supérieure à la température du composant.

Des résines à base polyépoxyde, polyimide ou silicone sont préférentiellement utilisées pour avoir les propriétés nécessaires dans la gamme de température de fonctionnement ainsi que les niveaux de tension envisagés pour les applications électrotechniques en aéronautique embarquée. Des résines de ce type sont déjà utilisées dans la fabrication des bobines inductives selon l'état de l'art antérieur. Par ailleurs, la température de réticulation de ce type de résine permet de les utiliser pour des composants dont les bobinages voient des températures d'environ 250°C.

Les propriétés rhéologiques nécessaires à la résine pour l'application sur l'aluminium anodisé sont obtenues par le biais de dilution dans des solvants organiques. La proportion de solvant ajustant le niveau de viscosité de la résine est définie par expérimentation pour chaque formulation de résine précitée.

Une variante de l'invention consiste à remplacer la résine par un matériau mis en oeuvre par procédé sol-gel. Le procédé sol-gel permet par une polymérisation de précurseurs moléculaires en solution, d'obtenir des matériaux vitreux sans passer par l'étape de fusion. Il est en particulier possible d'obtenir des matériaux solides minéraux ayant les propriétés diélectriques voulues à partir de mélanges sol-gel organo-minéraux.

Bien que les processus chimiques soient différents du cas de la réticulation d'une résine thermodurcissable, l'enrobage d'une bande d'aluminium anodisé, non colmaté, par un matériau via un procédé sol-gel se fait de manière similaire en deux étapes :
- une étape d'application du mélange précurseur sur la bande d'aluminium, par exemple par projection ;
- une étape de réticulation par traitement thermique, appelée plutôt polymérisation avec les matériaux utilisés dans un procédé sol-gel, où les réactions avec les éléments précurseurs dans le mélange précurseur forment le matériau final.

Pour la mise en oeuvre dans l'invention, un mélange précurseur du type comprenant de l'eau, de l'acide acétique, du méthanol, de l'isopropanol et un organosilane est par exemple utilisé. Des composants complémentaires comme des hydrates d'aluminium permettent d'obtenir les propriétés diélectriques voulues.

Avantageusement, on utilise également des polymères inorganiques pour obtenir, de manière connue des céramiques avec un procédé sol-gel. Les céramiques ont des propriétés mécaniques et thermiques qui permettent d'utiliser les bobines obtenues par le procédé dans des composants dont les températures peuvent atteindre 250°C et la tension électrique de fonctionnement 2KV.

Dans le cas de l'utilisation du procédé sol-gel, on ne passe pas par une bande pré-imprégnée, ou prétraitée. En effet, dans le cas du procédé sol-gel, le processus de « réticulation » une fois démarré doit être mené à son terme. Il n'y a pas d'état intermédiaire « gélifié » qui aurait des propriétés plastiques utiles. Les étapes de fabrication de la bobine du composant sont donc :
- une mise en forme de la bande d'aluminium anodisé, non colmaté, dans la géométrie de la bobine finale ;
- une application du mélange précurseur pour le procédé sol-gel de manière à ce qu'il se lie intimement à l'aluminium anodisé et qu'il remplisse le volume de la bobine ;
- Une application du traitement thermique de réticulation pour obtenir le produit final.

## Revendications

1. Procédé de fabrication d'une bande d'aluminium anodisé imprégnée, destinée à être utilisée dans une bobine d'un composant électrotechnique, ladite bobine comprenant un matériau interstitiel assurant les fonctions de cohésion et d'isolation diélectrique,
ledit matériau interstitiel étant obtenu à partir d'un mélange précurseur apte à réticuler,
ledit procédé comportant :
- une étape d'application du mélange précurseur dudit matériau interstitiel sur l'aluminium anodisé ;
- au moins une étape de réticulation du mélange précurseur pour former ledit matériau interstitiel sur la bande d'aluminium ;
**caractérisé en ce que** l'aluminium anodisé n'a pas subi de colmatage des pores de l'alumine formés par l'anodisation avant l'application du mélange précurseur dudit matériau interstitiel.

2. Procédé de fabrication selon la revendication précédente dans lequel le mélange précurseur comprend une résine et un durcisseur.

3. Procédé de fabrication de bande d'aluminium pré-imprégné selon la revendication précédente dans lequel il entre dans la formulation de la résine au moins un composant choisi parmi les polyépoxydes, polyimides ou les silicones.

4. Procédé de fabrication de bandes d'aluminium anodisé pré-imprégnées selon l'une des revendications 2 ou 3 dans lequel l'étape de réticulation est inachevée.

5. Bande d'aluminium anodisé pré-imprégnée obtenue par un procédé selon la revendication précédente.

6. Procédé de fabrication selon la revendication 1 dans lequel le matériau interstitiel est un matériau obtenu par procédé sol-gel.

7. Procédé de fabrication d'un composant électrotechnique comprenant au moins une bobine, ladite bobine comprenant une bande d'aluminium anodisé enroulée en spires et un matériau interstitiel assurant les fonctions de cohésion et d'isolation diélectrique, **caractérisé en ce que** :
- La bande d'aluminium anodisé est imprégnée selon l'une des revendications 1, 2, 3, 4 ou 6 ;
- au moins une étape de réticulation définitive du mélange précurseur pour former ledit matériau interstitiel sur la bande d'aluminium est réalisée lorsque celle-ci est mise en forme aux dimensions de la bobine ;

8. Procédé de fabrication d'un composant électrotechnique selon la revendication 7 dans lequel la bande d'aluminium anodisé est pré-imprégnée par un procédé selon la revendication 4 avant d'être mise en forme aux dimensions de la bobine et de subir l'étape de réticulation définitive.

9. Composant électrotechnique comportant au moins une bobine obtenue à partir d'un procédé selon l'une des revendications 7 ou 8.

## Patentansprüche

1. Verfahren zur Herstellung eines getränkten Streifens aus eloxiertem Aluminium, der dazu vorgesehen ist, in einer Spule eines elektrotechnischen Bauteils verwendet zu werden, wobei die Spule ein interstitielles Material umfasst, das die Funktionen der Kohäsion und der dielektrischen Isolation sicherstellt,
wobei das interstitielle Material ausgehend von einem Vorläufergemisch erhalten wird, das in der Lage ist, zu vernetzen,
wobei das Verfahren umfasst:
- einen Schritt des Aufbringens des Vorläufergemisches des interstitiellen Materials auf das eloxierte Aluminium;
- mindestens einen Schritt des Vernetzens des Vorläufergemisches, um das interstitielle Material auf dem Aluminiumstreifen zu bilden;
**dadurch gekennzeichnet, dass** das eloxierte Aluminium vor dem Aufbringen des Vorläufergemisches des interstitiellen Materials keiner Versiegelung der durch das Eloxieren des Aluminiumoxids gebildeten Poren unterworfen war.

2. Herstellungsverfahren nach dem vorstehenden Anspruch, wobei das Vorläufergemisch ein Harz und einen Härter umfasst.

3. Verfahren zur Herstellung eines vorgetränkten Aluminiumstreifens nach dem vorstehenden Anspruch, wobei in die Formulierung des Harzes mindestens eine Komponente eingeht, die aus den Polyepoxiden, Polyimiden oder den Silikonen ausgewählt ist.

4. Verfahren zur Herstellung von vorgetränkten Streifen aus eloxiertem Aluminium nach einem der Ansprüche 2 oder 3, wobei der Schritt des Vernetzens nicht abgeschlossen ist.

5. Vorgetränkter Streifen aus eloxiertem Aluminium, der durch ein Verfahren nach dem vorstehenden Anspruch erhalten wird.

6. Herstellungsverfahren nach Anspruch 1, wobei das interstitielle Material ein Material ist, das durch Sol-Gel-Verfahren erhalten wird.

7. Verfahren zur Herstellung eines elektrotechnischen Bauteils, das mindestens eine Spule umfasst, wobei die Spule einen in Windungen gewickelten Streifen aus eloxiertem Aluminium und ein interstitielles Material umfasst, das die Funktionen der Kohäsion und der dielektrischen Isolation sicherstellt, **dadurch gekennzeichnet, dass**:
- der Streifen aus eloxiertem Aluminium nach einem der Ansprüche 1, 2, 3, 4 oder 6 getränkt wird;
- mindestens ein Schritt des endgültigen Vernetzens des Vorläufergemisches, um das interstitielle Material auf dem Aluminiumstreifen zu bilden, ausgeführt wird, wenn dieser in den Abmessungen der Spule in Form gebracht wird;

8. Verfahren zur Herstellung eines elektrotechnischen Bauteils nach Anspruch 7, wobei der Streifen aus eloxiertem Aluminium durch ein Verfahren nach Anspruch 4 vorgetränkt wird, bevor er in den Abmessungen der Spule in Form gebracht und dem Schritt des endgültigen Vernetzens unterworfen wird.

9. Elektrotechnisches Bauteil, das mindestens eine Spule umfasst, die ausgehend von einem Verfahren nach einem der Ansprüche 7 oder 8 erhalten wird.

## Claims

1. Method for manufacturing a strip of impregnated anodised aluminium, intended to be used in a coil of an electrotechnical component, said coil comprising an interstitial material providing the functions of cohesion and dielectric isolation,
said interstitial material being obtained from a precursor mixture able to cross-link,
said method comprising:
- a step of applying the precursor mixture of said interstitial material to the anodised aluminium,
- at least one step of cross-linking the precursor mixture in order to form said interstitial material on the aluminium strip;
**characterised in that** anodised aluminium has not undergone sealing of the pores of the alumina formed by anodising before application of the precursor mixture of said interstitial material.

2. Manufacturing method according to the preceding claim, in which the precursor mixture comprises a resin and a hardener.

3. Method for manufacturing a pre-impregnated aluminium strip according to the preceding claim, in which at least one component chosen from polyepoxides, polyimides or silicones forms part of the formulation of the resin.

4. Method for manufacturing pre-impregnated anodised aluminium strips according to either claim 2 or claim 3, in which the cross-linking step is incomplete.

5. Pre-impregnated anodised aluminium strip obtained by a method according to the preceding claim.

6. Manufacturing method according to claim 1, in which the interstitial material is a material obtained by a sol-gel method.

7. Method for manufacturing an electrotechnical component comprising at least one coil, said coil comprising a strip of anodised aluminium wound in turns and an interstitial material fulfilling the functions of cohesion and dielectric isolation, **characterised in that** :
- the anodised aluminium strip is impregnated according to one of claims 1, 2, 3, 4 or 6;
- at least one step of definitive cross-linking of the precursor mixture in order to form said interstitial material on the aluminium strip is performed when the latter is formed to the dimensions of the coil.

8. Method for manufacturing an electrotechnical component according to claim 7, in which the anodised aluminium strip is pre-impregnated by a method according to claim 4 before being formed to the dimensions of the coil and being subjected to the definitive cross-linking step.

9. Electrotechnical component comprising at least one coil obtained from a method according to either claim 7 or claim 8.
